# EUROPEAN PATENT APPLICATION

(11) **EP 3 799 486 A1**
(43) Date of publication of application: **31.03.2021**
(21) Application number: 19200466.1
(22) Date of filing: 30.09.2019
(51) Int. Cl.: H04W 52/02

(54) **UPLINK TRANSMISSIONS WHEN USING WAKEUP SIGNALS IN CELLULAR COMMUNICATION NETWORKS**

(71) Applicant: Nokia Technologies Oy, 02610 Espoo (FI)
(72) Inventor: KOSKINEN, Jussi-Pekka, 90420 Oulu (FI); KOSKELA, Timo, 90120 Oulu (FI); TURTINEN, Samuli, 91100 Ii (FI); KAIKKONEN, Jorma, 90800 Oulu (FI)
(74) Representative: Laine IP Oy

(57) **Abstract**

According to an example aspect of the present invention, there is provided a method comprising, monitoring a wakeup signal during a wakeup signal occasion, determining, based on the monitored wakeup signal, not to start a timer for an ON duration of a Discontinuous Reception, DRX, cycle and performing, based on the determination, at least one of a Channel State Information, CSI, measurement, CSI reporting and Sounding Reference Signal, SRS, transmission to a base station.

## Description

### FIELD

Various example embodiments relate in general to cellular communication networks and more specifically, to Channel State Information, CSI, reporting and Sounding Reference Signal, SRS, transmissions when using Wakeup Signals, WUSs, in such networks.

### BACKGROUND

User Equipments, UEs, typically have limited power. Hence, saving power of UEs is important in various cellular networks, such as, in networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is power consumption of UEs, which may be reduced by using Wakeup Signals, WUSs. Even though WUSs may be exploited to save power of UEs, at the same time it is important to ensure efficient operation of the cellular communication network.

### SUMMARY

According to some aspects, there is provided the subject-matter of the independent claims. Some embodiments are defined in the dependent claims.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect of the present invention, there is provided an apparatus comprising means for performing means for monitoring a wakeup signal during a wakeup signal occasion, means for determining, based on the monitored wakeup signal, not to start a timer for an ON duration of a Discontinuous Reception, DRX, cycle and means for performing, based on the determination, at least one of a Channel State Information, CSI, measurement, CSI reporting and Sounding Reference Signal, SRS, transmission to a base station. The apparatus may be a user equipment

In some embodiments of the first aspect, the apparatus may further comprise means for performing the at least one of a Channel State Information, CSI, measurement, CSI reporting and Sounding Reference Signal, SRS, transmission to the base station when the timer for the ON duration of the DRX cycle is not running.

In some embodiments of the first aspect, the apparatus may further comprise means for determining that no wakeup signal indicated the user equipment to wake up during the wakeup signal occasion and means for performing the at least one of a Channel State Information, CSI, measurement, CSI reporting and Sounding Reference Signal, SRS, transmission to the base station regardless of said determination.

In some embodiments of the first aspect, wakeup signal occasions may be periodic occasions outside an active time of the DRX cycle.

In some embodiments of the first aspect, the apparatus may further comprise means for performing the at least one of a Channel State Information, CSI, measurement, CSI reporting and Sounding Reference Signal, SRS, transmission to the base station during the configured ON duration period of the DRX cycle.

In some embodiments of the first aspect, the at least one of the CSI measurement, CSI reporting and SRS transmission may be periodic or aperiodic.

In some embodiments of the first aspect, the timer for the ON duration of the DRX cycle may be an onDurationTimer.

In some embodiments of the first aspect, the apparatus may further comprise means for receiving a wakeup signal from the base station, the wakeup signal indicating whether the user equipment is required to perform the at least one of a Channel State Information, CSI, measurement, CSI reporting and Sounding Reference Signal, SRS, transmission to the base station.

In some embodiments of the first aspect, the transmission of the at least one of a CSI measurement report and SRS transmission may depend on a length of the DRX cycle.

In some embodiments of the first aspect, multiple CSI measurement reports and SRS transmissions may be transmitted with different periodicity when a wakeup signal is not received during the wakeup signal occasion compared to a case wherein a wakeup signal is received during the wakeup signal occasion.

According to a second aspect of the present invention, there is provided an apparatus comprising means for configuring a user equipment to monitor wakeup signals during a wakeup signal occasion and means for receiving, when a timer of the user equipment for an ON duration of a Discontinuous Reception, DRX, cycle does not need to be started, at least one of a Channel State Information, CSI, reporting and Sounding Reference Signal, SRS, transmission from the user equipment. The apparatus may be a base station.

In some embodiments of the second aspect, the apparatus may further comprise means for refraining from transmitting a wakeup signal during the wakeup signal occasion.

According to a third aspect, there is provided a first method comprising monitoring a wakeup signal during a wakeup signal occasion, determining, based on the monitored wakeup signal, not to start a timer for an ON duration of a Discontinuous Reception, DRX, cycle and performing, based on the determination, at least one of a Channel State Information, CSI, measurement, CSI reporting and Sounding Reference Signal, SRS, transmission to a base station.

According to a fourth aspect, there is provided a second method comprising configuring a user equipment to monitor wakeup signals during a wakeup signal occasion and receiving, when a timer of the user equipment for an ON duration of a Discontinuous Reception, DRX, cycle does not need to be started, at least one of a Channel State Information, CSI, reporting and Sounding Reference Signal, SRS, transmission from the user equipment.

According to a fifth aspect of the present invention, there is provided an apparatus comprising at least one processing core, at least one memory including computer program code, the at least one memory and the computer program code being configured to, with the at least one processing core, cause the apparatus at least to perform determine, based on the monitored wakeup signal, not to start a timer for an ON duration of a Discontinuous Reception, DRX, cycle and perform, based on the determination, at least one of a Channel State Information, CSI, measurement, CSI reporting and Sounding Reference Signal, SRS, transmission to a base station.

In some embodiments of the fifth aspect, the at least one memory and the computer program code, with the at least one processing core, may further cause the apparatus at least to perform the at least one of a Channel State Information, CSI, measurement, CSI reporting and Sounding Reference Signal, SRS, transmission to the base station when the timer for the ON duration of the DRX cycle is not running.

In some embodiments of the fifth aspect, the at least one memory and the computer program code, with the at least one processing core, may further cause the apparatus at least to perform, determine that no wakeup signal indicated the user equipment to wake up during the wakeup signal occasion and perform the at least one of a Channel State Information, CSI, measurement, CSI reporting and Sounding Reference Signal, SRS, transmission to the base station regardless of said determination.

In some embodiments of the fifth aspect, wakeup signal occasions may be periodic occasions outside an active time of the DRX cycle.

In some embodiments of the fifth aspect, the at least one memory and the computer program code, with the at least one processing core, may further cause the apparatus at least to perform the at least one of a Channel State Information, CSI, measurement, CSI reporting and Sounding Reference Signal, SRS, transmission to the base station during the configured ON duration period of the DRX cycle.

In some embodiments of the fifth aspect, the at least one of the CSI measurement, CSI reporting and SRS transmission may be periodic or aperiodic.

In some embodiments of the fifth aspect, the timer for the ON duration of the DRX cycle may be an onDurationTimer.

In some embodiments of the fifth aspect, the at least one memory and the computer program code, with the at least one processing core, may further cause the apparatus at least to perform, receive a wakeup signal from the base station, the wakeup signal indicating whether the user equipment is required to perform the at least one of a Channel State Information, CSI, measurement, CSI reporting and Sounding Reference Signal, SRS, transmission to the base station.

In some embodiments of the fifth aspect, the transmission of the at least one of a CSI measurement report and SRS transmission may depend on a length of the DRX cycle.

In some embodiments of the fifth aspect, multiple CSI measurement reports and SRS transmissions may be transmitted with different periodicity when a wakeup signal is not received during the wakeup signal occasion compared to a case wherein a wakeup signal is received during the wakeup signal occasion.

According to a sixth aspect of the present invention, there is provided an apparatus comprising at least one processing core, at least one memory including computer program code, the at least one memory and the computer program code being configured to, with the at least one processing core, cause the apparatus at least to perform configure a user equipment to monitor wakeup signals during a wakeup signal occasion and receive, when a timer of the user equipment for an ON duration of a Discontinuous Reception, DRX, cycle does not need to be started, at least one of a Channel State Information, CSI, reporting and Sounding Reference Signal, SRS, transmission from the user equipment.

In some embodiments of the sixth aspect, the at least one memory and the computer program code, with the at least one processing core, may further cause the apparatus at least to perform, refrain from transmitting a wakeup signal during the wakeup signal occasion.

According to a seventh aspect of the present invention, there is provided non-transitory computer readable medium having stored thereon a set of computer readable instructions that, when executed by at least one processor, cause an apparatus to at least perform the first method.

According to an eighth aspect of the present invention, there is provided non-transitory computer readable medium having stored thereon a set of computer readable instructions that, when executed by at least one processor, cause an apparatus to at least perform the second method.

According to a ninth aspect of the present invention, there is provided a computer program configured to perform the first method. According to a tenth aspect of the present invention, there is provided a computer program configured to perform the second method.

### BRIEF DESCRIPTION OF THE DRAWINGS

FIGURE 1 illustrates an exemplary network scenario in accordance with at least some example embodiments;
FIGURE 2 illustrates a DRX cycle in accordance with at least some embodiments;
FIGURE 3 illustrates a WUS occasion in accordance with at least some embodiments;
FIGURE 4 illustrates an example apparatus capable of supporting at least some embodiments;
FIGURE 5 illustrates a signalling graph in accordance with at least some embodiments;
FIGURE 6 illustrates a flow graph of a first method in accordance with at least some embodiments;
FIGURE 7 illustrates a flow graph of a second method in accordance with at least some embodiments.

### EMBODIMENTS

Power savings and efficient operation of a cellular communication network may be provided by the procedures described herein. For instance, better beam management may be enabled when Wakeup Signals, WUSs, are configured by performing reporting of Channel State Information, CSI, and/or transmitting a Sounding Reference Signal, SRS, regardless of whether a timer for an ON duration of a Discontinuous Reception, DRX, cycle is started. More specifically, in some embodiments, at least one of a CSI measurement report and SRS transmission may be transmitted even if the timer for the ON duration of the DRX cycle was not started, i.e., even if no WUS was received during a WUS occasion. The at least one of a CSI measurement report and SRS transmission may be then used for beam management while unnecessary wake ups for monitoring the ON duration of the DRX cycle may be avoided.

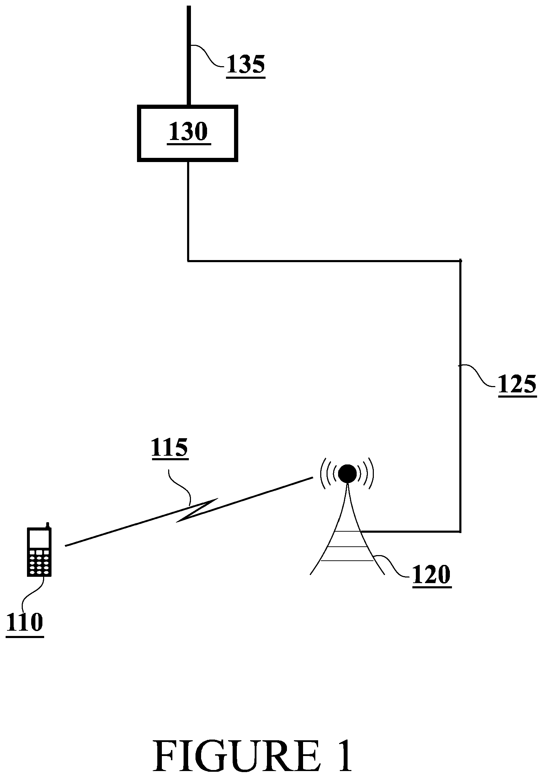

FIGURE 1 illustrates an exemplary network scenario in accordance with at least some example embodiments. According to the example scenario of FIGURE 1, there may be a cellular communication network, which comprises User Equipment, UE 110, Base Station, BS, 120, and core network element 130.

UE 110 may comprise, for example, a smartphone, a cellular phone, a Machine-to-Machine, M2M, node, Machine-Type Communications node, MTC, an Internet of Things, IoT, node, a car telemetry unit, a laptop computer, a tablet computer or, indeed, another kind of suitable UE or mobile station. In the example system of FIGURE 1, UE 110 may communicate wirelessly with BS 120, or with a cell of BS 120, via air interface 115. In some example embodiments, BS 120 may be considered as a serving BS, for UE 110.

UE 110 may be connected to BS 120 via air interface 115. Air interface 115 between UE 110 and BS 120 may be configured in accordance with a Radio Access Technology, RAT, which UE 110 and BS 120 are configured to support. Examples of cellular RATs include Long Term Evolution, LTE, New Radio, NR, which may also be known as fifth generation, 5G, radio access technology and MulteFire. For example, in the context of LTE, BS 120 may be referred to as eNB while in the context of NR, BS 120 may be referred to as gNB. In any case, example embodiments are not restricted to any particular wireless technology. Instead, example embodiments may be exploited in any wireless communication network wherein it is desirable to achieve power savings using DRX together with WSUs.

BS 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. BS 120 may be connected with at least one other BS as well via an inter-base station interface (not shown in FIGURE 1), even though in some example embodiments the inter-base station interface may be absent. BS 120 may be connected, directly or via at least one intermediate node, with core network 130 or with another core network.

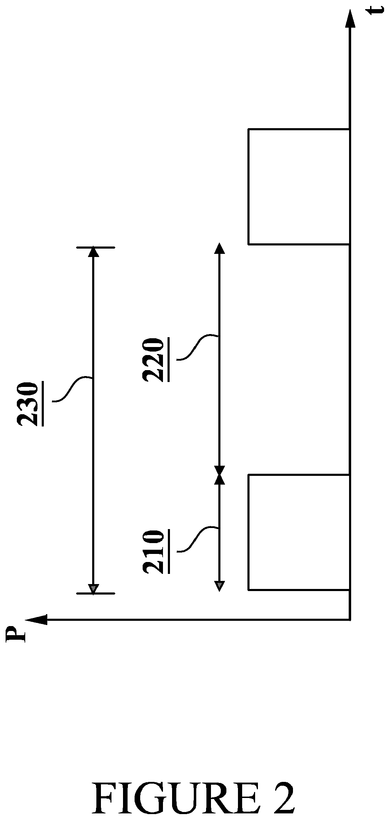

FIGURE 2 illustrates a DRX cycle in accordance with at least some embodiments. In FIGURE 2, onDuration is denoted by 210, opportunity for DRX is denoted by 220 and DRX cycle is denoted by 230. In some embodiments, onDuration 210 may be referred to as an ON duration of DRX cycle 230 while opportunity for DRX 220 may be referred to as a sleeping period, i.e., OFF duration of DRX cycle. In FIGURE 2, power consumption, *P*, of UE 110 of FIGURE 1 is shown on the *y*-axis and time, t, is shown on the *x*-axis.

When DRX is configured, UE 110 may not have to continuously monitor a downlink control channel, such as a Physical Downlink Control Channel, PDCCH. DRX may be characterized by onDuration 210, an inactivity timer, a retransmission timer, DRX cycle 230 and an active time. For instance, onDuration 210 may refer to a time when UE 110 is monitoring the downlink control channel. That is to say, onDuration 210 may refer to a duration of time that UE 110 waits for, after waking up, to receive downlink control channel transmissions.

If UE 110 successfully decodes a downlink control channel transmission, e.g., a PDCCH transmission, UE 110 may stay awake and start the inactivity timer. The inactivity timer may define a duration of time that UE 110 waits for to successfully decode a downlink control channel transmission, from the last successful decoding of a downlink control channel transmission. UE 110 may go back to sleep after failing to decode a downlink control channel while the inactivity timer was running. That is to say, UE 110 may go back to sleep once the inactivity timer has expired. On the other hand, UE 110 may restart the inactivity timer if a downlink control channel transmission is decoded successfully for a first transmission only (i.e., not for retransmissions).The retransmission timer then may define a duration of time during which a retransmission may be expected.

DRX cycle 230 may then specify a length of a cycle which comprises onDuration 210 and opportunity for DRX 220, i.e., a possible period of inactivity. In other words, DRX cycle 230 may specify the periodic repetition of onDuration 210 followed by opportunity for DRX 220.

Active time may specify the total duration of time that UE 110 monitors a downlink control channel, such as a PDCCH. Active time may comprise onDuration 210 of DRX cycle 230, the time UE 110 is performing continuous reception, i.e., the inactivity timer has not expired, and the time when UE 110 is performing continuous reception while waiting for a retransmission opportunity.

For instance, active time may be defined as follows according to 3rd Generation Partnership Project, 3GPP, standard specification TS 38.321 V15.6.0:
- *When a DRX cycle is configured, the Active Time includes the time while:*
- *drx-onDurationTimer or drx-InactivityTimer or drx-RetransmissionTimerDL or drx-RetransmissionTimerUL or ra-ContentionResolutionTimer (as described in clause 5.1.5) is running; or*
- *a Scheduling Request is sent on PUCCH and is pending (as described in clause 5.4.4); or*
- *a PDCCH indicating a new transmission addressed to the C-RNTI of the MAC entity has not been received after successful reception of a Random Access Response for the Random Access Preamble not selected by the MAC entity among the contention-based Random Access Preamble (as described in clause 5.1.4).*

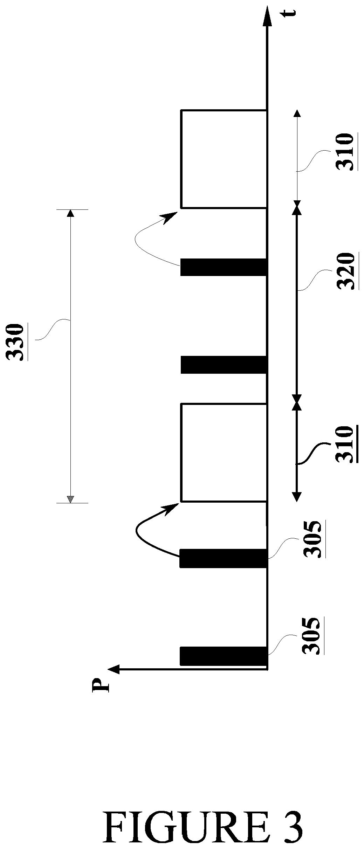

FIGURE 3 illustrates a WUS occasion in accordance with at least some embodiments. In FIGURE 3, WUS occasions are denoted by 305 (shown as black boxes). In addition, onDuration 310, opportunity for DRX 320 and DRX cycle 330 may correspond to onDuration 210, opportunity for DRX 220 and DRX cycle 230 of FIGURE 2, respectively. WUS occasions 305 may be periodic occasions outside an active time of DRX cycle 330. As shown in FIGURE 3, WUS occasions 305 may not overlap with onDuration 310 for example, i.e., there are no WUS occasions during onDuration 310.

In some embodiments, a WUS may be considered as a power saving indication, such as a PDCCH based power saving indication. For instance, a WUS may be considered as an activity preamble. In some embodiments, a WUS may be considered as a DCI format scrambled with a specific RNTI. In some embodiments, the monitoring of WUS is determined by a time window and/or offset with respect to DRX on-duration. In some embodiments, the WUS monitoring occasions may be determined by the search space configuration. With reference to FIGURE 1 again, a WUS may be transmitted from BS 120 to UE 110, to indicate to UE 110 whether it should monitor a subsequent downlink control channel, or not. That is to say, a WUS may be used to indicate to UE 110 whether it is required to start a timer for onDuration 310 of DRX cycle 330.

A simple detector and signal processing unit may be used for detecting the WUS while allowing UE 110 to keep a main baseband receiver, which may be used for detection of the downlink control channel, in a sleep mode as much as possible. Thus, WUSs may be used to achieve further power savings on top of the DRX.

WUSs may be transmitted/received during WUS occasions 305. WUS occasions 305 may be configured, e.g., together with a DRX configuration for UE 110 of FIGURE 1. UE 110 may determine whether it is required to monitor a downlink control channel, such as PDCCH, during the next onDuration 310 based on a presence of a WUS during WUS occasion 305. That is to say, if UE 110 receives a WUS during WUS occasion 305, UE 110 may determine that it is required to monitor the downlink control channel during the next onDuration 310, e.g., according to normal search space configuration. Alternatively, if UE 110 does not receive any WUS during WUS occasion 305, it may determine that it is not required to monitor the downlink control channel during the next onDuration 310. The next OnDuration may be referred to as an occurrence of a next timer for OnDuration 310 of DRX cycle 330, such as a next OnDurationTimer.

In some embodiments, UE 110 may be configured to monitor WUS occasions 305 on a downlink control channel, such as PDCCH. If UE 110 receives a WUS during WUS occasion 305, i.e., UE 110 is indicated to wake up, UE 110 may, in response to the reception, monitor the downlink control channel during the next occurrence of the timer for OnDuration 310 of DRX cycle 330, i.e., the next OnDurationTimer. That is to say, UE 110 may start the timer for OnDuration 310 of DRX cycle 330 at its next occasion if a WUS is received during WUS occasion 305, but UE 110 may not start the timer for OnDuration 310 of DRX cycle 330 at its next occasion if no WUSs are received during WUS occasions 305.

Power consumption of UE 110 may be thus controlled by controlling behaviour of UE 110 related to monitoring of the downlink control channel. Consequently, power savings may be enabled. If UE 110 is not configured for WUSs 305, UE 110 may be required to monitor the downlink control channel every OnDuration 310, i.e., an ON duration of DRX cycle 330, when the timer for OnDuration 310 of DRX cycle 330 is running for example.

The requirement for monitoring the downlink control channel may not be directly controlled by WUSs. For example, WUSs may control or indicate that the timer for OnDuration 310 of DRX cycle 330 is to be started as in legacy DRX, or when UE 110 is not configured for WUSs. WUSs may be used to control that UE 110 would not be required to monitor the downlink control channel during the configured OnDuration 310 if there is no WUS that has indicated UE 110 to start the timer for onDuration 310 and therefore indicate UE 110 that it is required to monitor the downlink control channel when the timer for onDuration 310 is running 310.

Since the timer for OnDuration 310 of DRX cycle 330 may not be started at all if no WUS is received during WUS occasion 305, UE 110 may not be considered to be in active time in such a case. Consequently, UE 110 may not be able to perform uplink tasks, such as CSI reporting and SRS transmissions, tied to the DRX operation. That is to say, UE 110 may not be able to perform tasks that are tied to having the timer for OnDuration 310 of DRX cycle 330 running. CSI reporting and SRS transmissions may be used for beam management for example. Thus, link failures or link degradation may be caused if UE 110 is not performing beam management related reporting upon determining that no WUS was received, thereby leading to less efficient operation of the cellular communication network.

Embodiments of the present invention therefore address the above mentioned challenges by providing improvements which enable more efficient operation of the cellular communication network when DRX is used together with WUS, while power consumption of UE 110 may also be reduced. For instance, embodiments of the present invention enable better beam management because CSI reporting and/or SRS transmission may be performed even if no WUS was transmitted during WUS occasion 305 (and hence the onDurationTimer would not be started), without requiring UE 110 to monitor a downlink control channel, such as a PDCCH.

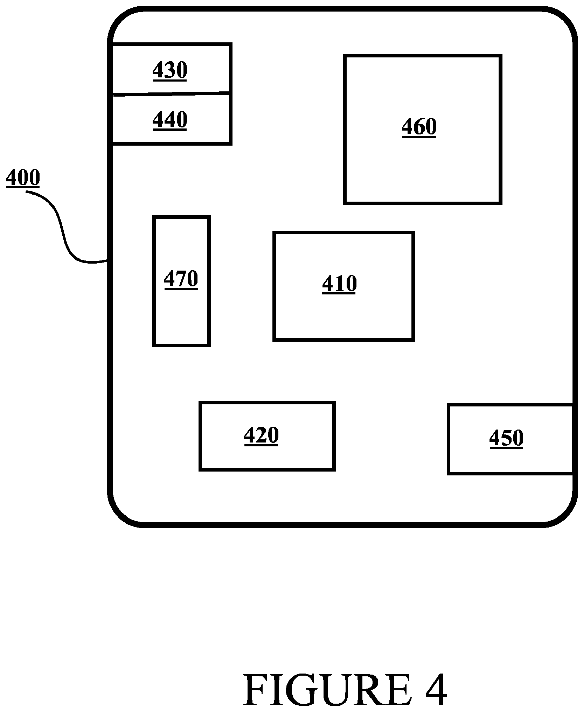

FIGURE 4 illustrates an example apparatus capable of supporting at least some embodiments. Illustrated is device 400, which may comprise, for example, UE 110 or BS 120. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core produced by Advanced Micro Devices Corporation. Processor 410 may comprise at least one Qualcomm Snapdragon and/or Intel Atom processor. Processor 410 may comprise at least one Application-Specific Integrated Circuit, ASIC. Processor 410 may comprise at least one Field-Programmable Gate Array, FPGA. Processor 410 may be means for performing method steps in device 400. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as UE 110 or BS 120, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with Global System for Mobile Communication, GSM, Wideband Code Division Multiple Access, WCDMA, 5G/NR, Long Term Evolution, LTE, IS-95, Wireless Local Area Network, WLAN, Ethernet and/or Worldwide Interoperability for Microwave Access, WiMAX, standards, for example.

Device 400 may comprise a Near-Field Communication, NFC, transceiver 450. NFC transceiver 450 may support at least one NFC technology, such as NFC, Bluetooth, Wibree or similar technologies.

Device 400 may comprise User Interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a Subscriber Identity Module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

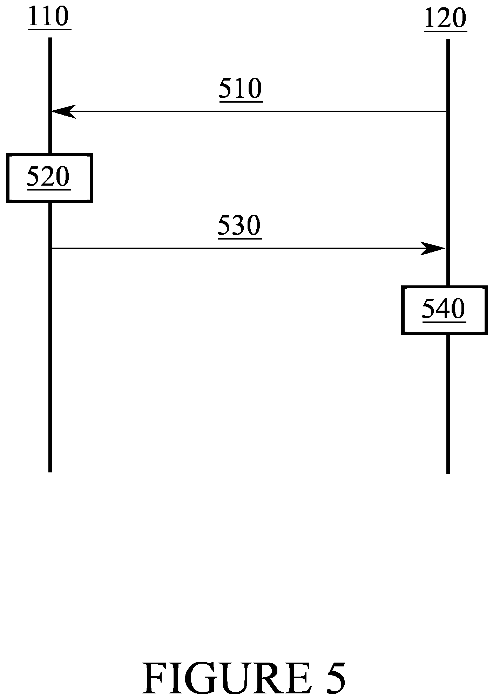

FIGURE 5 illustrates a signalling graph in accordance with at least some embodiments. On the vertical axes are disposed, from the left to the right, UE 110 and BS 120 of FIGURE 1. Time advances from the top towards the bottom.

At step 510, BS 120 may configure UE 110 to monitor a downlink control channel for WUSs during a WUS occasion, wherein the WUSs may be used to indicate, i.e., determine, whether UE 110 is required to start a timer for an ON duration of a DRX cycle. For instance, BS 120 may configure UE 110 for DRX and WUS by transmitting at least one configuration message to UE 110.

With reference to FIGURE 3 for example, the WUS occasion may be WUS occasion 305 and the ON duration of the DRX cycle may be OnDuration 310 of DRX cycle 330. The timer for the ON duration of the DRX cycle may be an onDurationTimer. The downlink control channel may be a PDCCH.

At step 520, UE 110 may monitor the downlink control channel for WUSs during the WUS occasion (or multiple occasions), to determine whether it is required to start the timer for the ON duration of the DRX cycle. In some embodiments, the WUS occasion may comprise a periodic occasion (or multiple occasions, or monitoring window wherein the WUS is monitored) outside an active time of the DRX cycle. Monitoring of WUS may be performed prior to the configured on duration of the DRX cycle. However, BS 120 may decide that the timer for the ON duration of the DRX cycle does not need to be started. BS 120 may decide to refrain from transmitting an indication to UE 110 to start the timer for the ON duration of the DRX cycle, for instance if there is no DL data to UE 110.

At step 530, UE 110 may transmit, regardless of said monitoring at step 520, at least one of a CSI measurement report and SRS transmission to BS 120. UE 110 may perform at least one uplink task related to having the timer for the ON duration of the DRX cycle running, such as CSI measurements/reporting and/or SRS transmission, if UE 110 is configured for WUS but the timer for the ON duration of the DRX cycle is not started because UE 110 is not indicated during the WUS occasion to wake up to monitor the downlink control channel (by triggering the start of the timer for onDuration) during the ON duration of the DRX cycle.

So even though the timer for the ON duration of the DRX would not be running, UE 110 may consider, i.e., assume, the timer running from CSI reporting and SRS transmission perspective but not from the perspective of the downlink control channel monitoring during the ON duration of the DRX cycle, because the timer is not actually running. In other words, there is no need to monitor the downlink control channel during the ON duration of the DRX cycle. UE 110 may assume that it is being on active time from CSI reporting and SRS transmission perspective only, but not from the perspective of the downlink control channel monitoring during the ON duration of the DRX cycle.

In some embodiments, even though the timer for the ON duration of the DRX would not be running, UE 110 may consider, i.e., assume, the timer running from CSI reporting and SRS transmission perspective and the performing the transmission of the said CSI reporting, SRS or any configured UL signal/channel/control message may trigger UE to monitor PDCCH for specific duration after transmission. In some examples the UL transmission may trigger the start of onDurationTimer for specific number of slots (e.g. 1,2,3,4 etc..) or milliseconds. In other words, UE 110 would be monitoring PDCCH for specific timer duration after performing UL transmission as described herein. Alternatively, UE 110 may determine to monitor PDCCH for specific timer duration without starting the onDurationTimer. The time duration to monitor PDCCH may be dependent on the type of UL transmission e.g. whether a CSI reporting or SRS or UL control/data was transmitted. The time duration to monitor may be configured by network or predetermined.

In some embodiments, UE 110 may perform at least one uplink task related to having the timer for the ON duration of the DRX cycle running, such as CSI measurements/reporting and/or SRS transmission, regardless of whether a WUS is received during the WUS occasion, or not, because the WUS may be a trigger for starting the timer for the ON duration of the DRX cycle. So for specific uplink tasks, such as CSI reporting and SRS transmission, UE 110 may consider, i.e., assume the timer for the ON duration of the DRX cycle running regardless of a WUS indication. Thus, UE 110 may transmit the at least one of a CSI measurement report and SRS transmission even if no WUS was received during the WUS occasion.

In some embodiments, UE 110 may decide, based on said monitoring, not to start the timer for the ON duration of the DRX cycle, for example if no WUS was received during the WUS occasion. UE 110 may anyway perform the at least one uplink task related to having the timer for the ON duration of the DRX cycle running. That is to say, UE 110 may decide, based on monitoring the downlink control channel for WUSs during the WUS occasion, that the timer for the ON duration of the DRX cycle should not be started but then transmit the at least one of a CSI measurement report and SRS transmission regardless of said decision.In some embodiments, the at least one of a CSI measurement report and SRS transmission may be transmitted during the ON duration of the DRX cycle. The at least one of a CSI measurement report and SRS transmission may be transmitted by UE 110 during the expected ON duration of the DRX cycle, even if UE 110 would not perform monitoring of the downlink control channel during the ON duration of the DRX cycle.

Alternatively, or in addition, BS 120 may configure UE 110 by indicating whether the transmission of the at least one of a CSI measurement report and SRS transmission should be affected by the timer for the ON duration of the DRX cycle, i.e., the onDurationTimer, or active time when UE 110 is configured for WUSs but no WUS was received during the WUS occasion to indicate that UE 110 should start the timer for the ON duration of the DRX cycle. For instance, UE 110 may receive a configuration, the configuration indicating whether the transmission of a CSI measurement report and/or SRS transmission should depend on whether the timer for the ON duration of the DRX cycle is started.

In any of the embodiments herein, whether UE can assume/determine the timer for onDuration to be running from CSI reporting and SRS transmission perspective but not from the perspective of the downlink control channel monitoring during the ON duration of the DRX cycle may be configurable by network. The configuration may be provided e.g. using RRC and provided in DRX configuration, WUS configuration or in CSI-RS measurement/reporting configuration or an SRS configuration. The configuration may specifically apply for CSI reporting or SRS or for both or any uplink related task or transmission may be separately configured.

In some embodiments, UE 110 may transmit CSI measurement reports and/or SRS transmissions more frequently, or less frequently, if WUS is configured but the timer for the ON duration of the DRX cycle is not started because UE 110 is not indicated during the WUS occasion to wake up, to monitor the downlink control channel during the ON duration of the DRX cycle. That is to say, UE 110 may transmit multiple CSI measurement reports and/or SRS transmissions with different periodicity when a WUS is not received during the WUS occasion compared to a case wherein a WUS is received during the WUS occasion. That is to say, periodicity may refer to transmitting more or less frequently than if a WUS would have been received, i.e., if the timer for the ON duration of the DRX cycle is started. The alternative periodicity may be configurable by network and/or may be associated to WUS configuration in some examples.

For instance, UE 110 may transmit multiple CSI measurement reports and/or SRS transmissions more frequently when a wakeup signal is received and the timer for the ON duration of the DRX cycle started, for example to enable better beam management. Alternatively, UE 110 may transmit multiple CSI measurement reports and/or SRS transmissions less frequently when a wakeup signal is not received and the timer for the ON duration of the DRX cycle is not started, e.g., to enable further power savings. In other words, if UE 110 is configured for WUS, UE 110 may assume different reporting period, i.e., it may consider the onDurationtimer to be running from CSI reporting and SRS transmission perspective, but the reporting period determines whether UE 110 actually reports anything.

In some embodiments, UE 110 may transmit CSI measurement reports and/or SRS transmissions at least once every *N* DRX cycle when the timer for the ON duration of the DRX cycle is not started, i.e., the onDurationTimer is not started, because UE 110 is not indicated during the WUS occasion to wake up. For instance, if a WUS is not received, i.e., a WUS does not trigger the timer for the ON duration of the DRX cycle, for 2 DRX cycles in a row, UE 110 may transmit a CSI measurement report and/or SRS transmission during the next ON duration of a DRX cycle, for example at a time when the onDurationTimer would be expected to run if a WUS would have been received. That is to say, UE 110 may determine that it has not received any WUSs during more than one previous DRX cycle, or more than one WUS occasion, and transmit CSI measurement reports and/or SRS transmissions responsive to the determination.

In some embodiments, the parameter *N* may be configured differently for example for Short DRX and Long DRX. That is to say, transmission of the at least one of a CSI measurement report and SRS transmission may depend on a length of the DRX cycle. As an example, in case of Long DRX cycles UE 110 may transmit CSI measurement reports and/or SRS transmissions every DRX cycle, for example for every expected time when the timer for the ON duration of the DRX cycle would be running if a WUS would be received during the WUS occasion, while in case of Short DRX UE 110 may transmit CSI measurement reports and/or SRS transmissions once every *N*th DRX cycle.

In some embodiments, a WUS may be used to indicate whether UE 110 shall, or is required to, transmit CSI measurement reports and/or SRS transmissions even if the timer for the ON duration of the DRX cycle is not started, i.e., the onDurationTimer is not started, when UE 110 is not indicated during the WUS occasion to wake up. In other words the WUS may indicate that UE 110 may assume from CSI/SRS perspective that onDuration timer would be running although the WUS indicates that the timer is not started (from PDCCH monitoring perspective). That is to say, BS 120 may transmit a WUS to UE 110, the WUS indicating that UE 110 does not need to monitor the downlink control channel during the ON duration of the DRX cycle and that the user equipment should, or is required to, transmit the at least one of a CSI measurement report and SRS transmission in any case. So BS 120 may indicate to UE 110, using a WUS, that UE 110 is not required to wake up to monitor the downlink control channel during the ON duration of the DRX cycle but UE 110 shall consider the timer for the ON duration of the DRX cycle running from the perspective of transmitting the at least one of a CSI measurement report and SRS transmission.

In some embodiments, if UE 110 is configured for WUS but a WUS is not received during the WUS occasion, i.e., the WUS occasion does not indicate that UE 110 shall start the timer for the ON duration of the DRX cycle, UE 110 may determine if CSI would have been reported at least once if the corresponding timer, such as the onDurationTimer, would have been running. In such a case UE 110 may assume from CSI reporting and SRS transmission perspective that it is on active time or the onDurationTimer is running.

For instance, UE 110 may assume from the perspective of the transmission of the CSI measurement reports and/or SRS transmissions that it is on active time or the timer for the ON duration of the DRX cycle is running for a full duration of the timer, a part of a duration of the timer, a certain number of slots of the timer, a certain number of milliseconds of the timer or as long as UE 110 has sent at least one of a CSI measurement report and SRS transmission per configured reporting instance, for example in case UE 110 is configured to report multiple different CSI reports. In this case UE 110 may or may not be required to monitor PDCCH. UE 110 may assume that from CSI-reporting or SRS or any UL transmission perspective the onDurationTimer would be running. Alternatively, the timer is considered to be running (e.g. the partial onDuration) and UE 110 would assume to be on active time, i.e., to monitor PDCCH.

In some examples, e.g. for CSI reporting, in any of the embodiments the assumption for the timer for onDuration to be running even though WUS has not indicated the start may be dependent or associated with specific type of CSI feedback. In one example the CSI information may comprise of at least one of Channel Quality Indicator,CQI, precoding matrix indicator,PMI, CSI-RS resource indicator,CRI,, SS/PBCH Block Resource indicator,SSBRI, layer indicator,LI, rank indicator,RI and/or L1-RSRP. The onDuration timer may be assumed to be running as described herein e.g. for L1-RSRP CSI feedback but not PMI. This may be configurable and configured per CSI information type.

In one embodiment, a timer may be configured for CSI reporting, SRS transmission or for any uplink transmission for the configured onDuration of the DRX cycle. Timer may be referred as e.g. CSI reporting Timer, SRS transmission timer or UplinkTransmissionTimer. These are only examples. There may be a separate timer for each uplink task (e.g. CSI reporting) or timer may be common for all, or the timer may only be used for e.g. CSI reporting and SRS.

The timer, as an example UplinkTransmissionTimer, may be started when the onDuration of the DRX cycle occurs i.e. it would be started when the configured onDuration would occur e.g. as in legacy DRX or when WUS is not configured. Timer may be running parallel with onDurationTimer when WUS indicates UE 110 to start the onDuration timer, or alternatively the timer may be started when UE 110 is not indicated by WUS to start the onDuration timer. When the timer is running UE 110 determines that specific tasks are performed such as CSI reporintg / SRS or any uplink activity associated with onDurationTimer as if the onDurationTimer would be running. Alternatively UE 110 may start the timer and determine if the UplinkTransmissionTimer is running and determine whether specific UL tasks are to be performed. In one further example, UE 110 may not be required to monitor PDCCH when the UplinkTransmissionTimer is running. In some examples, UE 110 may be required to monitor PDCCH for specific duration after performing UL transmission task as described in some of the embodiments. In some embodiments the periodicity of the UplinkTransmissionTimer may have different periodicity than the DRX onDurationTimer.

At step 540, BS 120 may exploit the received CSI measurement report and/or SRS transmission for example for beam management, even though BS 120 decided that the timer for the ON duration of the DRX cycle does not need to be started. Nevertheless, upon receiving for example a CSI measurement report and/or SRS transmission, BS 130 may perform beam management related tasks since UE 110 is providing network information, such as the CSI feedback, for example a L1-RSRP. The connectivity may be therefore maintained during the DRX operation. At the same, BS 120 may for example trigger beam changes to UE 110 based on the provided CSI feedback. Thus, efficient operation of the cellular communication network is enabled.

Embodiments of the present invention enable power savings, because BS 120 does not need to start the timer for the ON duration of the DRX cycle to get CSI measurement report and/or SRS transmission from UE 110. That is to say, BS 120 does not need to put UE 110 to listen to the ON duration of the DRX cycle, e.g., for the duration of onDurationTimer, just to get CSI measurement report and/or SRS transmission from UE 110.

In some embodiments,

```
 1> if WUS has indicated the UE to start drx-onDurationTimer or WUS has not been
 configured:
      2> if the Short DRX Cycle is used, and [(SFN × 10) + subframe number] modulo
      (drx-ShortCycle) = (drx-StartOffset) modulo (drx-ShortCycle); or
      2> if the Long DRX Cycle is used, and [(SFN × 10) + subframe number] modulo
      (drx-LongCycle) = drx-StartOffset:
      2>start drx-onDurationTimer after drx-SlotOffset from the beginning of the
      subframe.
```

In some embodiments,

```
1> if WUS is configured and has not indicated the UE to start drx-onDurationTimer; and
1> if in current symbol n, drx-onDurationTimer would be otherwise running as specified
 above in this clause:
      2> transmit periodic SRS and semi-persistent SRS defined in TS 38.214 [7].
      2> report CSI on PUCCH and semi-persistent CSI on PUSCH.
```

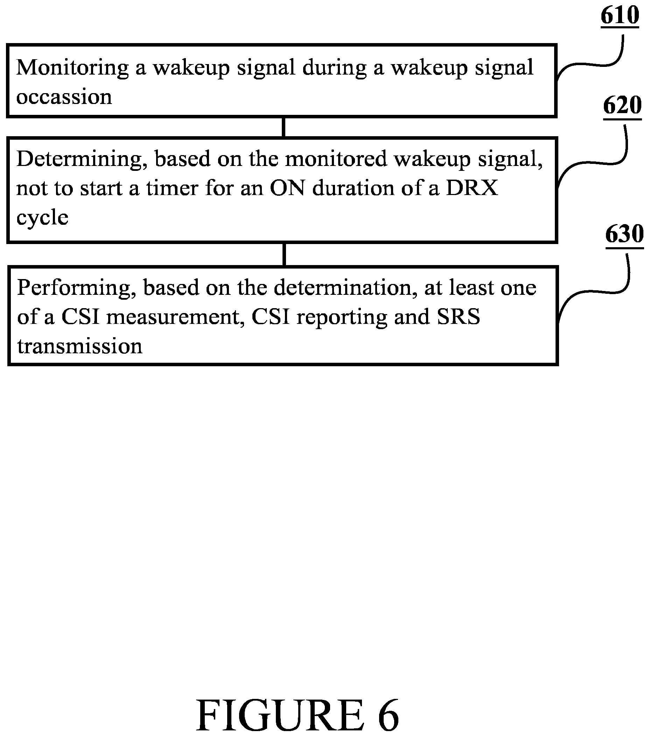

FIGURE 6 is a flow graph of a first method in accordance with at least some embodiments. The phases of the illustrated first method may be performed by UE 110, or by a control device configured to control the functioning thereof, possibly when installed therein.

The first method may comprise, at step 610, monitoring a wakeup signal during a wakeup signal occasion. The first method may also comprise, at step 620, determining, based on the monitored wakeup signal, not to start a timer for an ON duration of a Discontinuous Reception, DRX, cycle. Finally, the first method may comprise, at step 630, performing, based on the determination, at least one of a Channel State Information, CSI, measurement, CSI reporting, Sounding Reference Signal, SRS, transmission, uplink control transmission and uplink data transmission to a base station.

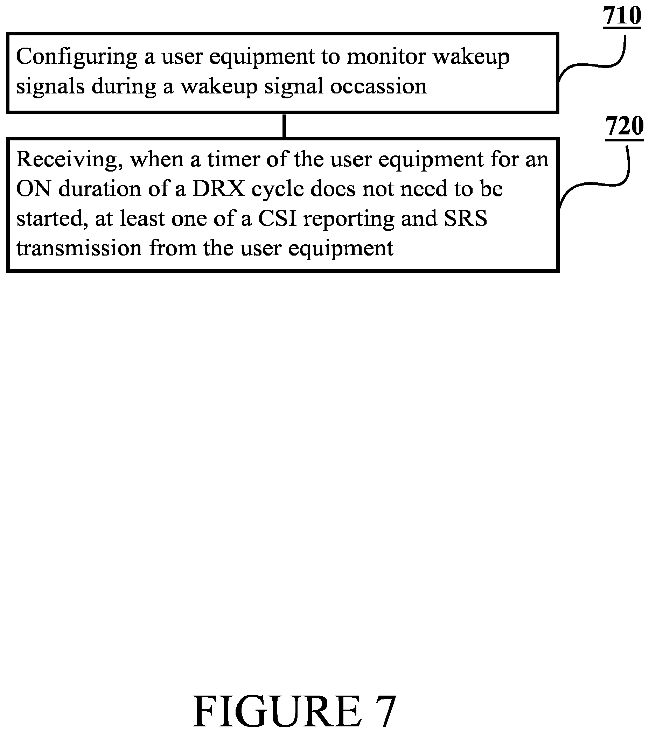

FIGURE 7 is a flow graph of a second method in accordance with at least some embodiments. The phases of the illustrated second method may be performed by BS 120, or by a control device configured to control the functioning thereof, possibly when installed therein.

The second method may comprise, at step 710, configuring a user equipment to monitor wakeup signals during a wakeup signal occasion. The second method may also comprise, at step 720, receiving, when the timer for the ON duration of the DRX cycle does not need to be started, at least one of a Channel State Information, CSI, reporting, Sounding Reference Signal, SRS, transmission, uplink control transmission and uplink data transmission from the user equipment.

Another method may comprise configuring a user equipment to monitor a downlink control channel for wakeup signals during a wakeup signal occasion, wherein the wakeup signals indicate whether the user equipment is required to start a timer for an ON duration of a DRX cycle. The method may also comprise receiving, regardless of whether the timer for the ON duration of the DRX cycle needs to be started, at least one of a CSI measurement report and SRS transmission, uplink control transmission and uplink data transmission from the user equipment.

Another embodiment may comprise configuring a user equipment to monitor a downlink control channel for wakeup signals during a wakeup signal occasion, wherein the wakeup signals indicate whether the user equipment is required to start control channel monitoring. The method may also comprise receiving, regardless of whether the control channel needs to be monitored, at least one of a CSI measurement report and SRS transmission, uplink control transmission and uplink data transmission from the user equipment.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an exemplary embodiment, an apparatus, such as, for example, UE 110 or BS 120, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, UE 110 or BS 120, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments find industrial application in cellular communication networks, wherein it is desirable to enable better performance of the cellular communication network when DRX is used together with WUSs, such as in networks operating according to 3GPP standards. For instance, embodiments of the present invention may be applied for 3GPP RAN Rel-16 standardization.

### ACRONYMS LIST

- 3GPP: 3rd Generation Partnership Project
- ASIC: Application-Specific Integrated Circuit
- BS: Base Station
- CSI: Channel State Information
- DRX: Discontinuous Reception
- EPC: Evolved Packet Core
- FPGA: Field-Programmable Gate Array
- GSM: Global System for Mobile communication
- IoT: Internet of Things
- LTE: Long-Term Evolution
- M2M: Machine-to-Machine
- NFC: Near-Field Communication
- NR: New Radio
- PDCCH: Physical Downlink Control Channel
- RAT: Radio Access Technology
- RRC: Radio Resource Control
- RRM: Radio Resource Management
- SIM: Subscriber Identity Module
- SRS: Sounding Reference Signal
- UE: User Equipment
- UI: User Interface
- WCDMA: Wideband Code Division Multiple Access
- WiMAX: Worldwide Interoperability for Microwave Access
- WLAN: Wireless Local Area Network
- WUS: Wakeup Signal

**REFERENCE SIGNS LIST**

| | |
|---|---|
| 110 | User Equipment |
| 115, 125, 135 | Interfaces |
| 120 | Base Station |
| 130 | Core network |
| 210, 310 | OnDuration |
| 220, 320 | Opportunity for DRX |
| 230, 330 | DRX cycle |
| 305 | Wakeup signal occasion |
| 400 - 470 | Structure of the apparatus of FIGURE 4 |
| 510 - 540 | Steps in the signaling graph of FIGURE 5 |
| 610 - 630 | Phases of the first method in FIGURE 6 |
| 710 - 720 | Phases of the second method in FIGURE 7 |

## Claims

1. An apparatus, comprising:
- means for monitoring a wakeup signal during a wakeup signal occasion;
- means for determining, based on the monitored wakeup signal, not to start a timer for an ON duration of a Discontinuous Reception, DRX, cycle; and
- means for performing, based on the determination, at least one of a Channel State Information, CSI, measurement, CSI reporting and Sounding Reference Signal, SRS, transmission to a base station.

2. An apparatus according to claim 1, further comprising:
- means for performing the at least one of a Channel State Information, CSI, measurement, CSI reporting and Sounding Reference Signal, SRS, transmission to the base station when the timer for the ON duration of the DRX cycle is not running.

3. An apparatus according to claim 1 or claim 2, further comprising:
- means for determining that no wakeup signal indicated the user equipment to wake up during the wakeup signal occasion; and
- means for performing the at least one of a Channel State Information, CSI, measurement, CSI reporting and Sounding Reference Signal, SRS, transmission to the base station regardless of said determination.

4. An apparatus according to any of the preceding claims, wherein wakeup signal occasions are periodic occasions outside an active time of the DRX cycle.

5. An apparatus according to any of the preceding claims, further comprising:
- means for performing the at least one of a Channel State Information, CSI, measurement, CSI reporting and Sounding Reference Signal, SRS, transmission to the base station during the configured ON duration period of the DRX cycle.

6. An apparatus according to any of the preceding claims, wherein the at least one of the CSI measurement, CSI reporting and SRS transmission is periodic or aperiodic.

7. An apparatus according to any of the preceding claims, wherein the timer for the ON duration of the DRX cycle is an onDurationTimer.

8. An apparatus according to any of the preceding claims, further comprising:
- means for receiving a wakeup signal from the base station, the wakeup signal indicating whether the user equipment is required to perform the at least one of a Channel State Information, CSI, measurement, CSI reporting and Sounding Reference Signal, SRS, transmission to the base station.

9. An apparatus according to any of the preceding claims, wherein the transmission of the at least one of a CSI measurement report and SRS transmission depends on a length of the DRX cycle.

10. An apparatus according to any of the preceding claims, wherein multiple CSI measurement reports and SRS transmissions are transmitted with different periodicity when a wakeup signal is not received during the wakeup signal occasion compared to a case wherein a wakeup signal is received during the wakeup signal occasion.

11. An apparatus, comprising:
- means for configuring a user equipment to monitor wakeup signals during a wakeup signal occasion; and
- means for receiving, when a timer of the user equipment for an ON duration of a Discontinuous Reception, DRX, cycle does not need to be started, at least one of a Channel State Information, CSI, reporting and Sounding Reference Signal, SRS, transmission from the user equipment.

12. An apparatus according to claim 11, further comprising:
- means for refraining from transmitting a wakeup signal during the wakeup signal occasion.

13. A method for a user equipment, comprising:
- monitoring a wakeup signal during a wakeup signal occasion;
- determining, based on the monitored wakeup signal, not to start a timer for an ON duration of a Discontinuous Reception, DRX, cycle; and
- performing, based on the determination, at least one of a Channel State Information, CSI, measurement, CSI reporting and Sounding Reference Signal, SRS, transmission to a base station.

14. A method for a base station, comprising:
- configuring a user equipment to monitor wakeup signals during a wakeup signal occasion; and
- receiving, when a timer of the user equipment for an ON duration of a Discontinuous Reception, DRX, cycle does not need to be started, at least one of a Channel State Information, CSI, reporting and Sounding Reference Signal, SRS, transmission from the user equipment.

15. A computer program configured to perform a method according to any of claims 1 - 10 or 11 - 12.
